# FASCICULE DE BREVET EUROPEEN

(11) **EP 0 774 446 B1**
(45) Date de publication et mention de la délivrance du brevet: **15.03.2000**
(21) Numéro de dépôt: 96402435.0
(22) Date de dépôt: 14.11.1996
(51) Int. Cl.: C04B 28/02, E21F 15/00

(54) **Coulis à forte conductivité thermique et procédé de fabrication d'un tel coulis**
Mörtel mit hoher Wärmeleitfähigkeit und Verfahren zur Herstellung dieses Mörtels
Mortar with high thermal conductivity and process for making such mortar

(30) Priorité: 17.11.1995 FR 9513649
(43) Date de publication de la demande: 21.05.1997
(73) Titulaire: COMPAGNIE DU SOL, 92000 Nanterre (FR)
(72) Inventeur: Vattement, Hubert, 77130 Montereau (FR)
(74) Mandataire: Dronne, Guy

(56) Documents cités:
- AT-B- 394 037
- DE-B- 1 234 173
- GB-A- 1 232 180
- US-A- 4 292 188
- DATABASE WPI Section Ch, Week 8239 Derwent Publications Ltd., London, GB; Class L02, AN 82-83095E XP002026995 & SU 883 523 A (AS KAZA MINING INST) , 23 Novembre 1981
- DATABASE WPI Section Ch, Week 9202 Derwent Publications Ltd., London, GB; Class A85, AN 92-014203 XP002010318 & JP 03 265 556 A (ONODA CEMENT KK) , 26 Novembre 1991
- DATABASE WPI Section Ch, Week 8823 Derwent Publications Ltd., London, GB; Class L02, AN 88-155365 XP002027171 & BR 8 604 173 A (CEGATTI N) , 3 Mai 1988

## Description

Dans les canalisations enterrées contenant des lignes à haute tension, il est connu de remplir l'espace laissé libre entre les fourreaux contenant les câbles avec un coulis présentant d'une part, une forte conductivité thermique, afin d'évacuer la chaleur dégagée par effet Joule par les câbles, et d'autre part, une bonne injectabilité afin de remplir les canalisations de façon homogène.

Dans la pratique, on constate généralement que la conductivité thermique d'un coulis est très voisine de la conductivité thermique théorique que l'on peut calculer en prenant en compte les conductivités thermiques de tous les constituants de ce coulis.

Comme coulis à forte conductivité thermique, on connaît déjà un coulis à base de ciment, de bentonite, de dolomie et d'eau.

Un tel coulis présente une conductivité thermique supérieure à celle d'un coulis ordinaire, c'est-à-dire composé uniquement de bentonite, de ciment et d'eau, et des propriétés de résistance et d'injectabilité similaires.

Cette forte conductivité thermique résulte de la conductivité thermique de la dolomie qui est très élevée, et qui confère au coulis une conductivité thermique directement fonction de la quantité de dolomie ajoutée au mélange.

La présente invention vise à fournir un coulis qui présente une conductivité thermique accrue par rapport aux coulis déjà connus, tout en présentant des propriétés de résistance à la compression et d'injectabilité appropriées pour pouvoir être utilisé dans des canalisations enterrées.

La présente invention a pour objet un coulis à forte conductivité thermique, notamment du type destiné à être injecté dans une canalisation enterrée contenant des lignes à haute tension, obtenu par mélange de ciment, d'eau, de bentonite et de dolomie, ce coulis étant caractérisé par le fait que la dolomie est composée majoritairement de grains dont la taille est inférieure à environ 50 µm.

Au sens de l'invention, une proportion est dite majoritaire lorsqu'elle représente au moins environ 80 % en poids de la composition totale considérée et de préférence de l'ordre de 95 % en poids de cette composition.

Des mesures effectuées par la demanderesse ont révélé que la conductivité thermique d'un tel coulis est très supérieure à celle calculée en prenant en compte les conductivités thermiques des tous les composants du coulis.

En d'autres termes, il s'avère que la faible taille de grains de la dolomie, sans augmentation de la proportion de dolomie dans le mélange, accroît considérablement la conductivité thermique du coulis, phénomène qu'aucun calcul théorique basé sur la conductivité thermique propre de chacun de composants n'aurait pu prévoir, et ce d'autant plus que la conductivité thermique d'une substance dépend a priori de son volume et non de sa surface spécifique.

De préférence, le mélange comprend une quantité en poids de dolomie au moins sensiblement égale à la quantité en poids d'eau.

La présente invention a également pour objet un procédé de fabrication d'un coulis à forte conductivité thermique, notamment du type destiné à être injecté dans une canalisation enterrée contenant des lignes à haute tension, consistant à mélanger du ciment, de l'eau, de la bentonite et de la dolomie.

Ce procédé est caractérisé par le fait que l'on broie finement la dolomie avant de l'incorporer au mélange ou que l'on incorpore au mélange de la dolomie finement broyée, la dolomie finement broyée étant composée majoritairement de grains dont la taille est inférieure à environ 50 µm.

Dans le but de mieux faire comprendre l'invention, on va en donner maintenant quelques exemples non limitatifs.

### FORMULE TEMOIN

A partir d'une formule témoin dont la composition est la suivante :
. ciment CLK CEM III/C 32,5 Ebange = 500 Kg
. Bentonite CV15 = 10 Kg
. Dolomie C110s dont la majorité des grains présente une taille comprise entre environ 50 et environ 300µm = 1000 Kg
. Eau = 1000 Kg
on obtient un coulis dont la résistance à la compression est supérieure à 0,8 MPa à deux jours, qui présente l'injectabilité requise et dont la conductivité thermique à 7 jours, jusqu'à une température de 60°C, est de 1,13 W/K.m.

Cette valeur correspond à la conductivité thermique théorique obtenue par calcul en tenant compte de la composition du mélange.

### EXEMPLE 1

A partir de la composition suivante :
. Ciment CLK CEM III/C 32,5 = 500 Kg
. Bentonite CV 15 = 10 Kg
. Dolomie DRB 3 composée majoritairement de grains dont la taille est comprise entre entre environ 0,5 et environ 10 µm = 1000 Kg
. eau = 1000 Kg
on obtient un coulis dont la résistance à la compression est voisine de 0,8 MPa à deux jours, qui présente l'injectabilité requise et dont la conductivité thermique à 7 jours, jusqu'à une température de 60°C, est de 1,27 W/K.m, valeur qui est très supérieure à la valeur de 1,13 W/K.m indiquée ci-dessus.

### EXEMPLE 2

A partir de la composition suivante :
. Ciment CLK CEM III/C 32,5 = 500 Kg
. Bentonite CV15 = 10 Kg
. Dolomie DRB 30 composée majoritairement de grains dont la taille est comprise entre environ 1 et environ 50 µm = 1000 Kg
. Eau = 1000 Kg
on obtient un coulis dont la résistance à la compression est voisine de 0,8 MPa à deux jours, qui présente l'injectabilité requise et dont la conductivité thermique à 7 jours, jusqu'à une température de 60°C, est de 1,21 W/K.m.

### EXEMPLE 3

A partir de la composition suivante :
. Ciment CLK CEM III/C 32,5 = 500 Kg
. Bentonite CV 15 = 5 Kg
. Dolomie DRB 30 composée majoritairement de grains dont la taille est comprise entre environ 1 et environ 50 µm = 1500 Kg
. Eau = 1000 Kg
c'est-à-dire comportant en poids plus de dolomie que d'eau, on obtient un coulis dont la résistance à la compression est voisine de 0,8MPa à deux jours, qui présente l'injectabilité requise et dont la conductivité thermique à 7 jours, jusqu'à une température de 60°C, est de 1,24 W/K.m.

Il est bien entendu que les exemples qui viennent d'être décrits ne présentent aucun caractère limitatif et qu'ils pourront recevoir toutes modifications désirables sans sortir pour cela du cadre de l'invention.

## Revendications

1. Coulis à forte conductivité thermique, notamment du type destiné à être injecté dans une canalisation enterrée contenant des lignes à haute tension, obtenu par mélange de ciment, d'eau, de bentonite et de dolomie, caractérisé par le fait que la dolomie est composée majoritairement de grains dont la taille est inférieure à environ 50µm.

2. Coulis selon la revendication 1, caractérisé par le fait que la quantité en poids de dolomie dans le mélange est au moins sensiblement égale à la quantité en poids d'eau dans le mélange.

3. Procédé de fabrication d'un coulis à forte conductivité thermique, notamment du type destiné à être injecté dans une canalisation enterrée contenant des lignes à haute tension, consistant à mélanger du ciment, de l'eau, de la bentonite et de la dolomie, caractérisé par le fait que l'on incorpore au mélange de la dolomie finement broyée, qui est composée majoritairement de grains dont la taille est inférieure à environ 50µm.

## Patentansprüche

1. Mörtel mit hoher Wärmeleitfähigkeit, insbesondere vom Typ, welcher dazu bestimmt ist, in erdverlegte Rohrleitungen eingespritzt zu werden, welche Fernleitungen enthalten, erhalten durch Vermischen von Zement, Wasser, Bentonit und Dolomit, dadurch gekennzeichnet, daß der Dolomit hauptsächlich aus Körnchen besteht, deren Größe unter etwa 50 µm liegt.

2. Mörtel nach Anspruch 1, dadurch gekennzeichnet, daß die Gewichtsmenge von Dolomit in der Mischung wenigstens merklich gleich der Gewichtsmenge von Wasser in der Mischung ist.

3. Verfahren zur Herstellung eines Mörtels mit hoher Wärmeleitfähigkeit, insbesondere vom Typ, welcher dazu bestimmt ist, in erdverlegte Rohrleitungen eingespritzt zu werden, welche Fernleitungen enthalten, das darin besteht, Zement, Wasser, Bentonit und Dolomit zu vermischen, dadurch gekennzeichnet, daß man der Mischung fein zermahlenen Dolomit einverleibt, welcher hauptsächlich aus Körnchen besteht, deren Größe unter etwa 50 µm liegt.

## Claims

1. Grout having high thermal conductivity, inter alia of the type intended to be injected into an underground conduit containing high-voltage lines, obtained by mixing cement, water, bentonite and dolomite, characterised in that the dolomite is composed for the majority of grains having a size of less than approximately 50 µm.

2. Grout according to claim 1, characterised in that the quantity by weight of dolomite in the mixture is at least substantially equal to the quantity by weight of water in the mixture.

3. Process for the production of a grout having high thermal conductivity, inter alia of the type intended to be injected into an underground conduit containing high-voltage lines, consisting in mixing cement, water, bentonite and dolomite, characterised in that finely ground dolomite composed for the majority of grains having a size of less than approximately 50 µm is incorporated into the mixture.
